# EUROPÄISCHE PATENTSCHRIFT

(11) **EP 0 447 902 B1**
(45) Veröffentlichungstag und Bekanntmachung des Hinweises auf die Patenterteilung: **17.08.1994**
(21) Anmeldenummer: 91103634.1
(22) Anmeldetag: 09.03.1991
(51) Int. Cl.: F16B 25/00

(54) **Schraube zum Befestigen von Gipskartonplatten**
Screw for fixing of gypsum plaster boards
Vis pour fixer des plaques de pavement en plâte

(30) Priorität: 20.03.1990 DE 4008962
(43) Veröffentlichungstag der Anmeldung: 25.09.1991
(73) Patentinhaber: Adolf Würth GmbH & Co. KG, D-74653 Künzelsau (DE)
(72) Erfinder: Weidner, Karl, W-7118 Ingelfingen (DE); Steck, Otto, W-7119 Forchtenberg (DE)
(74) Vertreter: Patentanwälte Ruff, Beier, Schöndorf und Mütschele

(56) Entgegenhaltungen:
- AT-B- 379 873
- CH-A- 519 115
- DE-C- 2 324 675
- US-A- 4 693 654

## Beschreibung

Die Erfindung betrifft eine Schraube, mit deren Hilfe Gipskartonplatten an Unterkonstruktionen angeschraubt werden können.

Gipskartonplatten sind aus einer zwischen zwei dünnen Kartons eingesetzten Gipsschicht aufgebaut. Wenn nun eine Schraube in eine Gipskartonplatte eingeschraubt wird, so zerreißt das Papier an der Oberseite und das Material der Platte, das keine hohe Festigkeit aufweist, wird von der Schraube verdrängt. Dadurch leidet die Haltekraft, mit der die Schraube die Gipskartonplatte an dem Untergrund festlegt. Die Schraubenköpfe werden normalerweise in der Gipskartonplatte versenkt, damit die Oberfläche weiterbearbeitet werden kann, beispielsweise tapeziert werden kann. Beim Eindringen des Schraubenkopfes in die Gipskartonplatte tritt das verdrängte Material jedoch seitlich des Schraubenkopfes über die Oberfläche heraus, so daß diese nicht mehr glatt ist. Ein Abschleifen der Oberfläche im Bereich des Schraubenkopfes würde einen unnötigen Mehraufwand bedeuten.

Es ist bereits eine Schraube zu diesem Zweck bekannt (DE-PS 23 24 675), deren relativ flacher Senkkopf an seiner Unterseite eine Schulter aufweist, die eine ringsum laufende Kante bildet. Diese Kante weist von der Stirnkante des Schraubenkopfes einen axialen und einen radialen Abstand auf. Die Kante dient dazu, den Karton an der Oberseite der Platte beim Einschrauben des Schraubenkopfes in die Platte hineinzuziehen, so daß der jenseits der Kante weiter außenliegende Teil des Schraubenkopfes an dem das verdichtete Material festhaltenden Karton anliegt. Diese Lösung ist bei Gipskartonplatten guter Qualität ausreichend. Bei Gipskartonplatten schlechterer Qualität ist die Schraube nicht in der Lage, sauber versenkt zu werden, sondern es baut sich außerhalb des Schraubenkopfes ein diesen umgebender Wulst auf.

Ebenfalls bekannt ist eine Schraube (US-A-3 056 234), bei der die Unterseite des Schraubenkopfes geschweift verläuft oder die Form zweier Kegelstümpfe aufweist.

Weiterhin bekannt ist eine Schraube zur Befestigung von Verkleidungsplatten (AT-A-379 873), deren Kopf an seinem Rand eine Schneidkante zum Zerschneiden der Fasern der Verkleidungsplatte, insbesondere eine Sperrholzplatte, aufweist. Diese Schneidkante befindet sich in einem Abstand von etwa ein Drittel der Höhe des Schraubenkopfs von dessen Stirnseite entfernt. Der Durchmesser des Schraubenkopfs beträgt vorzugsweise das 1,45 fache des Gewindeaussendurchmessers. Für Gipskartonplatten ist diese Schraube weder gedacht noch geeignet.

Der Erfindung liegt die Aufgabe zugrunde, eine Schraube zu schaffen, die unabhängig von der Qualität der Gipskartonplatte ein sauberes Versenken der Schraube ermöglichst, ohne daß sich außerhalb des Schraubenkopfes ein Wulst bildet. Gleichzeitig soll eine hohe Haltekraft erreicht werden.

Zur Lösung dieser Aufgabe schlägt die Erfindung eine Schraube nach den beiden unabhängigen Ansprüchen 1 und 2 vor. Weiterbildungen sind Gegenstand der Unteransprüche.

Die Erfindung schlägt ebenfalls die Verwendung einer solchen Schraube nach Anspruch 9 vor.

Die an der Stirnseite des Schraubenkopfes vorhandene Platte führt einerseits dazu, daß rein geometrisch die Haltekraft verbessert ist, da die Fläche, mit der die Schraube die Platte hält, größer wird. Andererseits verhindert sie, da sie zwar groß, aber dennoch dünn ist, das Aufwerfen des Materials der Gipskartonplatte außerhalb des Schraubenkopfes. Aufgrund des deutlichen Vorspringens der Platte gegenüber der Flanke des kegelstumpfförmigen Bereiches des Schraubenkopfes ist gleichzeitig dafür gesorgt, daß nicht mehr Material durch den Schraubenkopf verdrängt wird als bei bisherigen Senkkopfschrauben. Es ist im übrigen sogar möglich, den kegelstumpfförmigen Bereich des Schraubenkopfes spitzwinkliger auszugestalten, so daß auf diese Weise ebenfalls dafür gesorgt wird, daß möglichst wenig Material verdrängt wird, das zum Aufwerfen der Gipskartonplatte führen könnte.

Die Erfindung schlägt in Weiterbildung vor, daß die Schraubenspitze einen Winkel von etwa 20° aufweist. Aufgrund dieser sehr spitzen Ausbildung der Schraube wird beim Einsetzen der Schraube ein Loch in dem Karton gebildet, das dann allmählich erweitert wird, so daß die Gefahr eines Reißens des Kartons verringert wird.

Wenn die Gipskartonplatte auf einem metallischen Träger aufgeschraubt werden soll, so kann erfindungsgemäß vorgesehen sein, daß die Schraubenspitze eine Bohrspitze, insbesondere eine kaltgeschmiedete Bohrspitze aufweist.

Die Erfindung schlägt vor, daß die Dicke der Platte des Schraubenkopfes etwa ein Viertel der axialen Abmessung des gesamten Schraubenkopfes beträgt. Bei einer üblichen Schraube mit einem Durchmesser des Schraubenschaftes von etwa 4 mm und einer Gesamtlänge des Schraubenkopfes von ebenfalls 4 mm ist die Platte also etwa 1 mm dick.

Die Erfindung schlägt vor, daß der Durchmesser der Platte etwa das Zwei- bis Dreifache des Durchmessers des Schraubenschaftes betragen kann. Bei dem genannten Beispiel würde der Außendurchmesser der Platte also etwa 10 mm betragen.

Die Erfindung schlägt vor, daß der Kegelwinkel des kegelstumpfförmigen Teils des Schraubenkopfes etwa 60° betragen kann, wobei dieser Winkel als der Winkel zwischen den beiden im Längsschnitt gesehenen Flanken des Schraubenkopfes gemessen wird.

Erfindungsgemäß kann vorgesehen sein, daß das Gewinde des Schraubenschaftes ein doppelgängiges Gewinde ist.

In Weiterbildung der Erfindung kann vorgesehen sein, daß die Platte des Schraubenkopfes auf ihrer zur Schraubenspitze hin gewandten Unterseite einen Wulst aufweist. Dieser Wulst kann zum Festlegen der äußeren Kartonschicht ringsum das durch die Schraube gebildete Loch dienen. Der zwischen dem Rand des Lochs und dem Wulst vorhandene Rest des Kartons, der ggf. zerfasert ist, wird daher durch die Unterseite der Schraubenkopfplatte festgehalten. Insbesondere schlägt die Erfindung vor, daß der Wulst am Außenrand der Schraubenkopfplatte angeordnet ist. Es bildet sich dadurch auf der Unterseite der Schraubenkopfplatte eine Art Hohlraum, in dem sowohl der zerfaserte Rand des Kartons als auch möglicherweise verdrängtes Material aufgenommen und festgehalten wird.

Weitere Merkmale, Einzelheiten und Vorzüge der Erfindung ergeben sich aus den Ansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: eine Seitenansicht einer von der Erfindung vorgeschlagenen Schraube;
- Fig. 2: eine geänderte Schraubenspitze;
- Fig. 3: in vergrößertem Maßstab einen Längsschnitt durch den Schraubenkopf nach der Erfindung.

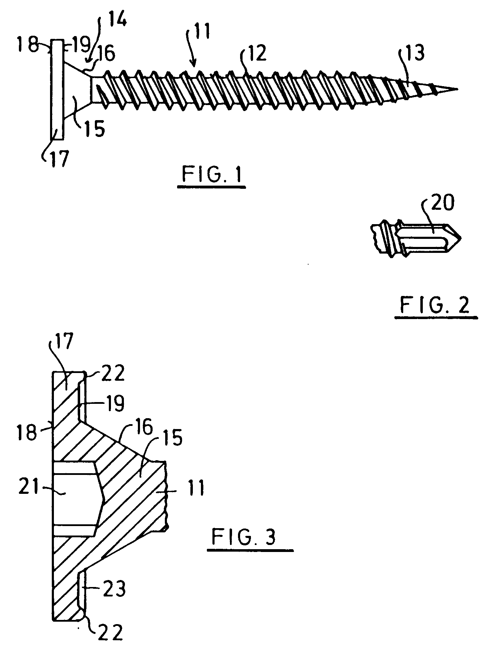

Die in Fig. 1 dargestellte Schraube enthält einen Schraubenschaft 11, der ein Doppelgang-Gewinde 12 aufweist. Im Bereich seines einen Endes geht der Schraubenschaft 11 in eine Schraubenspitze 13 über, in der die Höhe der Gewindegänge beider Gewinde abnimmt. Die Schraubenspitze 13 weist einen Spitzenwinkel von etwa 20° auf. Der Schraubenschaft 11 weist einen vom Schraubenkopf 14 bis zur Spitze nicht zunehmenden Durchmesser auf. Beide Gewindegänge reichen bis in die Schraubenspitze 13 hinein.

An dem der Schraubenspitze 13 abgewandten Ende geht der Schraubenschaft 11 in den Schraubenkopf 14 über. Der Schraubenkopf 14 enthält einen ersten Bereich 15, der unmittelbar an den Schraubenschaft 11 anschließt. Im Bereich 15 ist der Schraubenkopf 14 etwa kegelstumpfförmig ausgebildet. Die Flanken 16 dieses Bereiches verlaufen geradlinig und schließen miteinander einen Winkel von etwa 60° ein. Am Ende des kegelstumpfförmigen Bereiches 15 des Schraubenkopfs 14 ist eine kreisrunde, flachzylindrische Platte 17 angeordnet, deren dem Schraubenkopf 15 abgewandte Seite 18 die Stirnfläche des Schraubenkopfs 14 bildet und deren der Schraubenspitze 13 zugewandte Unterseite 19 parallel zur Stirnfläche verläuft. Der Durchmesser der Kopfplatte 17 ist deutlich größer als der größte Durchmesser des kegelstumpfförmigen Teils 15 des Schraubenkopfs 14. Der Durchmesser der Kopfplatte 17 beträgt etwa das Zweieinhalbfache des Spitzendurchmessers des Gewindes 12.

In axialer Richtung beträgt die Dicke der Kopfplatte 17 etwa ein Viertel der Axialerstreckung des gesamten Schraubenkopfes 14. Die Unterseite 19 bildet eine ebene Fläche, die in einer senkrecht zur Längsachse der Schraube stehenden Ebene liegt.

Während bei der Ausführungsform der Fig. 1 die Schraubenspitze sehr spitz ausläuft, ist bei der Ausführungsform der Fig. 2 an der Schraubenspitze eine Bohrspitze 20 angeordnet, die die Form einer bekannten Bohrspitze für selbstbohrende Schrauben aufweist. Die Bohrspitze 20 kann insbesondere kalt geschmiedet sein. Sie ist für hartes Metall geeignet.

Fig. 3 zeigt in vergrößertem Maßstab einen Teilschnitt in der Längsachse der Schraube. In den Schraubenkopf 14 ist von dessen Stirnseite 18 her eine Ausnehmung 21 eingebracht, die eine unrunde, insbesondere mehreckige Querschnittsform aufweist und zum Einsetzen eines Werkzeugs zum Eindrehen der Schraube bestimmt ist. Die Ausnehmung 21 erstreckt sich in Axialrichtung tiefer in den Schraubenkopf 14 hinein als dies der Dicke der Kopfplatte 17 entspricht.

An der Unterseite 19 der Kopfplatte 17, d.h. der der Schraubenspitze 13 zugewandten Seite der Kopfplatte 17, ist an dieser ein umlaufender Wulst 22 ausgebildet. Dieser umlaufende Wulst begrenzt zwischen sich und dem kegelstumpfförmigen Teil 15 des Schraubenkopfes 14 einen um diesen herumlaufenden Raum 23. Beim Eindrehen der Schraube in eine Gipskartonplatte können die Ränder des in dem Karton gebildeten Lochs und aus der Bohrung verdrängtes Gipsmaterial in diesen Raum 23 eindringen und dort festgehalten werden.

Vorzugsweise ist der Wulst 22, wie dies die Fig. 3 zeigt, unmittelbar am Außenrand der Kopfplatte 17 angeordnet. Daher kann der Wulst 22 an einem unzerstörten Bereich der äußeren Kartonschicht angreifen, und es steht ein besonders großer Ringraum 23 zum Unterbringen der Ränder zur Verfügung.

Die Dicke der Kopfplatte 17 beträgt beispielsweise 1 mm. Die Schraube nach der Erfindung wird so weit in die Gipskartonplatte eingeschraubt, daß die Stirnfläche 18 des Schraubenkopfes 14 bzw. der Kopfplatte 17 im wesentlichen bündig mit der äußeren Oberfläche der Gipskartonplatte verläuft. Bei dem Eindrehen mit einem automatischen Schrauber kann die richtige Stellung der Schraube entweder durch einen Tiefenanschlag oder aber durch einen Drehmoment-Begrenzer oder Drehmoment-Auslöser festgelegt werden. Die von der Erfindung vorgeschlagene Schraube hat den zusätzlichen besonderen Vorteil, daß bei Eindrehen der Schraube dann, wenn die Kopfplatte 17 in die Oberfläche der Gipskartonplatte einzudringen beginnt, das aufzubringende Drehmoment plötzlich stark ansteigt, so daß dies zu einem Auslösen eines Drehmoment-Auslösers verwendet werden kann.

Der Spitzenwinkel des Doppelgang-Gewindes 12 beträgt bevorzugt 45°, sowohl bei der Ausführungsform nach Fig. 1 als auch bei der Ausführungsform nach Fig. 2.

Statt der dargestellten bevorzugten Ausführungsform mit einem Doppelgewinde kann eine Schraube nach der Erfindung auch ein einfaches Gewinde aufweisen.

## Patentansprüche

1. Schraube zum Befestigen von Gipskartonplatten o.dgl. an Unterkonstruktionen, mit
1.1 einem ein Gewinde (12) aufweisenden Schraubenschaft (11),
1.2 einer Schraubenspitze (13), und
1.3 einem Schraubenkopf (14), der
1.3.1 in seinem an den Schraubenschaft (11) angrenzenden Bereich (15) etwa kegelstumpfförmig ausgebildet ist, und
1.3.2 im Bereich seines gegenüberliegenden Endes eine flache Platte (17) aufweist,
1.3.3 die gegenüber der Flanke (16) des kegelstumpfförmigen Bereiches (15) deutlich vorspringt,
1.3.4 deren Dicke etwa ein Viertel der axialen Erstreckung des Schraubenkopfes (14) beträgt,
1.3.5 deren Durchmesser etwa das Zwei- bis Dreifache des Durchmessers des Schraubenschaftgewindes (12) beträgt, und
1.3.6. deren der Schraubenspitze (13) zugewandte Unterseite (19) parallel zur Stirnfläche verläuft.

2. Schraube zum Befestigen von Gipskartonplatten o.dgl. an Unterkonstruktionen, mit
2.1 einem ein Gewinde (12) aufweisenden Schraubenschaft (11),
2.2 einer Schraubenspitze (13), und
2.3 einem Schraubenkopf (14), der
2.3.1 in seinem an den Schraubenschaft (11) angrenzenden Bereich (15) etwa kegelstumpfförmig ausgebildet ist, und
2.3.2 im Bereich seines gegenüberliegenden Endes eine flache Platte (17) aufweist,
2.3.3 die gegenüber der Flanke (16) des kegelstumpfförmigen Bereiches (15) deutlich vorspringt,
2.3.4 deren Dicke etwa ein Viertel der axialen Erstreckung des Schraubenkopfes (14) beträgt,
2.3.5 deren Durchmesser etwa das Zwei- bis Dreifache des Durchmessers des Schraubenschaftgewindes (12) beträgt, und
2.3.6 deren der Schraubenspitze (13) zugewandte Unterseite (19) einen zum Festlegen der äußeren Kartonschicht dienenden Wulst (22) aufweist.

3. Schraube nach Anspruch 1 oder 2, bei der die Schraubenspitze (13) einen Winkel von etwa 20° aufweist.

4. Schraube nach einem der vorhergehenden Ansprüche, bei der die Schraubenspitze (13) eine Bohrspitze mit einer Bohrschneide (20) aufweist.

5. Schraube nach einem der vorhergehenden Ansprüche, bei der der Kegelwinkel etwa 60° beträgt.

6. Schraube nach einem der vorhergehenden Ansprüche, bei der das Gewinde (12) ein Doppelgang-Gewinde ist.

7. Schraube nach einem der Ansprüche 2 bis 6, bei der der Wulst (22) am Außenrand der Kopfplatte (17) angeordnet ist.

8. Schraube nach einem der vorhergehenden Ansprüche, bei der die Kopfplatte (17) auf ihrer Unterseite (19) einen hinter ihrem Rand zurückspringenden Raum (23) bildet.

9. Verwendung einer Schraube nach einem der vorhergehenden Ansprüche zur Befestigung von Gipskartonplatten.

## Claims

1. Screw for fixing plasterboards or the like to substructures having
1.1 a screw shank (11) having a thread (12),
1.2 a screw tip (13) and
1.3 a screw head (14), which
1.3.1 is constructed in roughly truncated cone-shaped manner in its area (15) adjacent to the screw shank (11) and
1.3.2 has a flat plate (17) in the vicinity of its opposite end,
1.3.3 which projects clearly with respect to the flank (16) of the truncated cone-shaped area (15),
1.3.4 whose thickness is roughly 1/4 of the axial extension of the screw head (14),
1.3.5 whose diameter is roughly two to three times the diameter of the screw shank thread (12), and
1.3.6 whose underside (19) facing the screw tip (13) is parallel to the end face.

2. Screw for fixing plasterboards or the like to substructures having
2.1 a screw shank (11) having a thread (12),
2.2 a screw tip (13) and
2.3 a screw head (14), which
2.3.1 in its area (15) adjacent to the screw shank (11) is approximately truncated cone-shaped and
2.3.2 in the vicinity of its opposite end has a flat plate (17),
2.3.3 which clearly projects with respect to the flank (16) of the truncated cone-shaped area (15),
2.3.4 whose thickness is roughly 1/4 of the axial extension of the screw head (14),
2.3.5 whose diameter is approximately two to three times the diameter of the screw shank thread (12) and
2.3.6 whose underside (19) facing the screw tip (13) has a collar (22) used for fixing the outer cardboard layer.

3. Screw according to claim 1 or 2, wherein the screw tip (13) has an angle of approximately 20°.

4. Screw according to one of the preceding claims, wherein the screw tip (13) has an auger bit with a cutter (20).

5. Screw according to one of the preceding claims, wherein the taper angle is approximately 60°.

6. Screw according to one of the preceding claims, wherein the thread (12) is a double-start thread.

7. Screw according to one of the claims 2 to 6, wherein the collar (22) is located on the outer edge of the head plate (17).

8. Screw according to one of the preceding claims, wherein the head plate (17) forms on its underside (19) a space (23) passing back behind its edge.

9. Use of a screw according to one of the preceding claims for fixing plasterboards.

## Revendications

1. Vis pour fixer des plaques de pavement en plâtre ou analogues à des supports, comprenant :
1.1 une tige de vis (11) munie d'un filetage (12),
1.2 une pointe de vis (13) et
1.3 une tête de vis (14)
1.3.1 qui est réalisée approximativement en forme de tronc de cône dans la zone (15) adjacente à la tige de la vis (11) et
1.3.2 qui présente dans la zone de son extrémité opposée une plaquette plate (17)
1.3.3 qui fait nettement saillie par rapport au côté (16) de la zone en forme de tronc de cône (15)
1.3.4 dont l'épaisseur correspond environ au quart de l'étendue axiale de la tête de la vis (14),
1.3.5 dont le diamètre est environ le double ou le triple du diamètre du filetage (12) de la tige de la vis, et
1.3.6 dont la face inférieure (19) qui est tournée vers la pointe de la vis (13) s'étend parallèlement à la surface frontale.

2. Vis pour fixer des plaques de pavement en plâtre ou analogues à des supports, comprenant
2.1 une tige de vis (11) munie d'un filetage (12),
2.2 une pointe de vis (13) et
2.3 une tête de vis (14)
2.3.1 qui est réalisée approximativement en forme de tronc de cône dans la zone (15) adjacente à la tige de la vis (11) et
2.3.2 qui présente dans la zone de son extrémité opposée une plaquette plate (17)
2.3.3 qui fait nettement saillie par rapport au côté (16) de la zone en forme de tronc de cône (15)
2.3.4 dont l'épaisseur correspond environ au quart de l'étendue axiale de la tête de la vis (14),
2.3.5 dont le diamètre est environ le double ou le triple du diamètre du filetage (12) de la tige de la vis, et
2.3.6 dont la face inférieure (19) qui est tournée vers la pointe de la vis (13) présente un bourrelet (22) servant à fixer la couche de carton extérieure.

3. Vis selon la revendication 1 ou 2, dont la pointe de la vis (13) présente un angle de 20° environ.

4. Vis selon l'une des revendications précédentes, dont la pointe de la vis (13) présente une pointe d'alésoir munie d'une lame d'alésoir (20).

5. Vis selon l'une des revendications précédentes, dont l'angle du cône est environ 60°.

6. Vis selon l'une des revendications précédentes, dont le filetage (12) est un filetage à pas double.

7. Vis selon l'une des revendications 2 à 6, dont le bourrelet (22) est disposé sur le bord extérieur de la plaquette de tête (17).

8. Vis selon l'une des revendications précédentes, dont la plaquette de tête (17) forme sur sa face inférieure (19) un espace (23) qui est en retrait derrière le bord de cette face inférieure.

9. Mise en oeuvre d'une vis selon l'une des revendications précédentes pour fixer des plaques de pavement en plâtre.
